Europäisches Patentamt

European Patent Office

Office européen des brevets

(11) Veröffentlichungsnummer : **0 035 802**
**B1**

(12) **EUROPÄISCHE PATENTSCHRIFT**

(45) Veröffentlichungstag der Patentschrift :
14.09.83

(51) Int. Cl.³ : **G 01 P   3/66**

(21) Anmeldenummer : **81200091.7**

(22) Anmeldetag : **26.01.81**

(54) **Vorrichtung zur Messung der Anfangsgeschwindigkeit V-Null eines aus einer Waffe abgeschossenen Geschosses.**

(30) Priorität : **11.03.80 CH 1896/80**

(43) Veröffentlichungstag der Anmeldung :
**16.09.81 Patentblatt 81/37**

(45) Bekanntmachung des Hinweises auf die Patenterteilung : **14.09.83 Patentblatt 83/37**

(84) Benannte Vertragsstaaten :
**CH DE FR IT LI SE**

(56) Entgegenhaltungen :
**CA A 950 700**
**GB A 965 077**
**US A 2 691 761**
**US A 3 659 201**

(73) Patentinhaber : **Werkzeugmaschinenfabrik Oerlikon-Bührle AG**
**Birchstrasse 155**
**CH-8050 Zürich (CH)**

(72) Erfinder : **Zimmermann, Jakob**
**Churerstrasse 95**
**CH-8808 Pfäffikon (CH)**
Erfinder : **Kocher, Willi**
**Zurlindenstrasse 110**
**CH-8003 Zürich (CH)**

# Vorrichtung zur Messung der Anfangsgeschwindigkeit V-Null eines aus einer Waffe abgeschossenen Geschosses

Die Erfindung betrifft eine Vorrichtung zur Messung der Anfangsgeschwindigkeit eines aus einer Waffe abgeschossenen Geschosses, gemäss dem Oberbegriff des Anspruches 1.

Bei einer bekannten Vorrichtung dieser Art (kanadische Patentschrift Nr. 950 700) ist eine Hülse vorhanden, welche zwei im Abstand voneinander an beiden Enden der Hülse befestigte Messspulen aufweist, deren Achsen mit der Waffenrohrachse zusammenfallen. Diese Vorrichtung ist im dargestellten Beispiel mit Abstand vor der Mündung des Waffenrohres angeordnet.

Eine solche Vorrichtung hat den Nachteil, dass die Messung der Anfangsgeschwindigkeit von Treibspiegelgeschossen nicht möglich ist, da die vom Geschoss beim Austritt aus der Rohrmündung wegfliegenden Teile des Treibspiegels gegen die Messvorrichtung fliegen und diese beschädigen würden.

Hier will die Erfindung Abhilfe schaffen. Die Erfindung, wie sie in den Ansprüchen gekennzeichnet ist, löst die Aufgabe, eine Vorrichtung zu schaffen, die sich besonders zur Messung der Anfangsgeschwindigkeit von Treibspiegelgeschossen eignet, und bei der die Messspulen so angeordnet sind, dass keine Teile des zerfallenden Treibspiegels gegen die Messspulen prallen.

Vorteile der erfindungsgemässen Vorrichtung ergeben sich daraus, dass die Anfangsgeschwindigkeit von Treibspiegelgeschossen ebenso genau gemessen werden kann wie bei anderen Geschossen ohne Treibspiegel, dass Teile des zerfallenden Treibspiegels nicht gegen die Messspulen der Vorrichtung stossen können und dass die Messspulen besser vor den aggressiven Treibgasen geschützt sind als bisher.

Weitere Vorteile der erfindungsgemässen Vorrichtung ergeben sich aus der nachfolgenden Beschreibung eines Ausführungsbeispiels und aus den abhängigen Ansprüchen.

Ein Ausführungsbeispiel der erfindungsgemässen Vorrichtung zur Messung der Anfangsgeschwindigkeit $V_0$ eines aus einer Waffe abgeschossenen Geschosses ist im folgenden anhand der beigefügten Zeichnung ausführlich beschrieben. Es zeigt :

Figur 1 einen Längsschnitt durch die Vorrichtung zur $V_0$-Messung, enthaltend die Waffenrohrachse ;

Figur 2 einen weiteren Längsschnitt durch die in Fig. 1 gezeigte Vorrichtung in einer zum ersten Längsschnitt rechtwinklig stehenden Ebene.

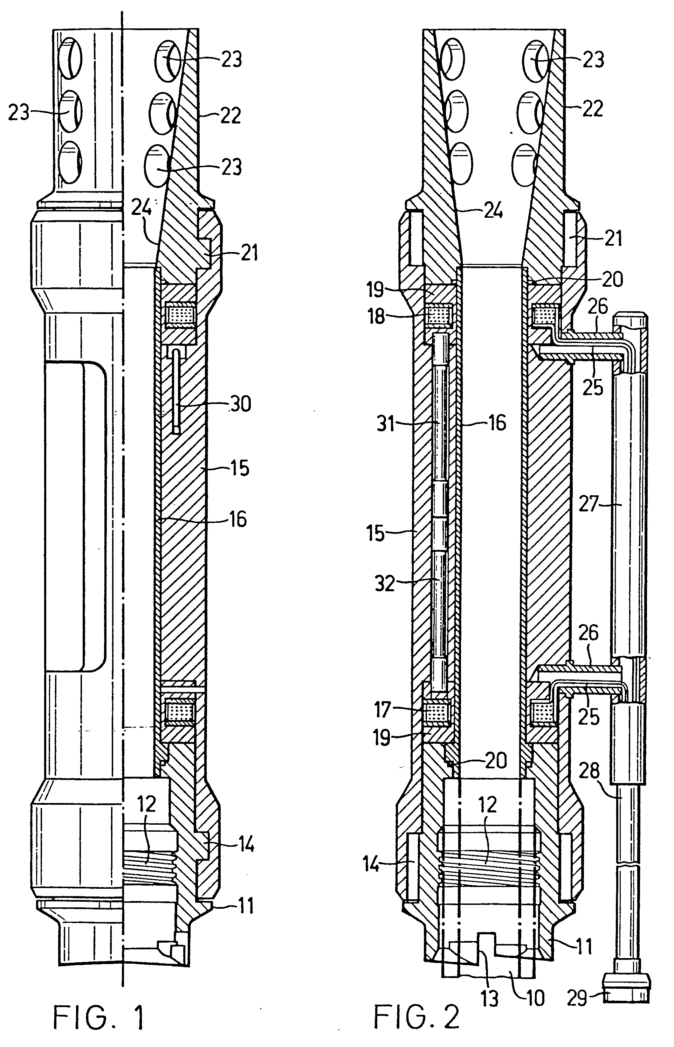

Gemäss Fig. 1 und 2 ist die erfindungsgemässe V-Null-Messvorrichtung an der Mündung eines strichpunktiert angedeuteten Waffenrohres 10 befestigt und weist ein Anschlussstück 11 auf. Dieses Anschlussstück 11 ist mit einem Innengewinde 12 versehen und kann auf ein entsprechendes nicht dargestelltes Aussengewinde des Waffenrohres 10 aufgeschraubt werden. Ein Schlitz 13 am hinteren Ende des Anschlussstückes 11 ermöglicht es, das Anschlussstück auf dem Waffenrohr 10 gegen unbeabsichtigte Drehung zu sichern. Am Anschlussstück 11 ist mit Hilfe eines Karabinerverschlusses 14 ein Rohr 15 befestigt, das vorzugsweise aus Stahl hergestellt ist. In dieses Rohr 15 ist eine Hülse 16 aus einem nicht magnetisierbaren Werkstoff eingesetzt. An den beiden Enden dieser Hülse 16 im Innern des Rohres 15 sind je eine elektrische Messspule 17, 18 angeordnet. Die beiden Messspulen 17, 18 sind in einem Schutzring 19 aus Titan von U-förmigem Querschnitt eingebettet. Damit die Messspulen 17 und 18 vor den aggressiven Treibgasen geschützt sind, ist an beiden Enden der Hülse 16 noch je ein Dichtungsring 20 angeordnet. Diese Dichtungsringe 20 verhindern, dass zwischen Hülse 16 und Rohr 15 Treibladungsgase eindringen können. Am vorderen Ende des Rohres 15 ist mit Hilfe eines Karabinerverschlusses 21 eine Mündungsbremse 22 befestigt. Diese Mündungsbremse 22 weist eine konische Bohrung 24 und eine Anzahl radiale Bohrungen 23 auf, durch welche die Treibgase ins Freie gelangen und dabei in bekannter Weise eine Bremswirkung ausüben, d. h. den Rücklauf des Waffenrohres teilweise auffangen.

Gemäss Fig. 2 sind Anschlussdrähte 25 der beiden Messspulen 17 und 18 durch zwei radial zur Waffenachse angeordnete Hülsen 26 hindurchgeführt. An diesen beiden Hülsen 26 ist ein parallel zur Waffenachse gerichtetes Rohr 27 befestigt, durch welches die Anschlussdrähte 25 in ein Kabel 28 geführt werden, das am hinteren Ende des Rohres 27 befestigt ist und an seinem hinteren Ende ein Kupplungsstück 29 aufweist.

Da sich durch die heissen Treibgase die ganze Messvorrichtung erwärmt, ist ein Temperaturfühler 30 in der Wandung des Rohres 15 angeordnet. Ein nicht näher dargestellter Anschlussdraht des Temperaturfühlers 30 ist ebenfalls durch die Hülse 26 und das Rohr 27 in das Kabel 28 geführt.

Die Wirkungsweise der beschriebenen Messvorrichtung ist wie folgt :

Wenn ein Treibspiegelgeschoss aus der Mündung des Kanonenrohres 10 in die Hülse 16 eindringt, wird durch diese Hülse 16 verhindert, dass sich der Treibspiegel vom Geschosskörper ablöst. Treibspiegel und Geschosskörper können sich somit erst nach dem Austritt aus Hülse 16 und Mündungsbremse 22 voneinander trennen. Die Messung der Anfangsgeschwindigkeit $V_0$ des Geschosses findet jedoch statt, während das Geschoss durch die Hülse 16 der V-Null Messvorrichtung hindurchfliegt, d. h. also bevor sich der Treibspiegel vom Geschoss ablöst. Eine Beeinträchtigung der V-Null-Messung durch den sich ablösenden oder bereits vom Geschoss abgelösten Treibspiegel wird vermieden. Wenn das Geschoss mit dem Treibspiegel durch die erste Messpule 17 hindurchfliegt, wird in dieser Spule 17 eine Signalspannung induziert, welche durch die Anschlussdrähte 25 an ein nicht dargestelltes Auswertgerät geleitet wird. Beim Durchtritt des Geschosses durch die zweite Messspule 18 wird in der selben Weise wie bei der ersten Spule 17 eine zweite Signalspannung induziert, die über die Anschlussdrähte 25 ebenfalls an das Auswertgerät geleitet wird. Aus der Zeitdifferenz zwischen den beiden Signalen und aus dem Abstand der beiden Spulen lässt sich dann in üblicher Weise die Geschwindigkeit berechnen, mit welcher das Geschoss durch die beiden Messspulen 17, 18 hindurch fliegt.

Da sich durch die heissen Treibgase die Messvorrichtung erwärmt und ausdehnt, verändert sich auch der Abstand zwischen den beiden Messspulen. Mit Hilfe des Temperaturfühlers 30 kann der temperaturabhängige Abstand der beiden Messspulen bei der Berechnung der Anfangsgeschwindigkeit eines Geschosses berücksichtigt werden.

Damit sich die beiden Messspulen 17 und 18 nicht gegeneinander verdrehen können, d. h. sich in der gewünschten Drehstellung zueinander befinden, sind in der Wandung des Rohres 15 zwei Bolzen 31, 32 befestigt, welche in Bohrungen der Schutzringe 19 aus Titan hineinragen. Dies erleichtert auch die Montage.

### Ansprüche

1. Vorrichtung zur Messung der Anfangsgeschwindigkeit eines aus einer Waffe abgeschossenen Geschosses, insbesondere Treibspiegelgeschosses, wobei die Vorrichtung an der Mündung des Waffenrohres (10) befestigt ist, und zwei Messspulen (17, 18) aufweist, welche im Abstand voneinander auf einer zum Waffenrohr koaxialen Hülse (16) befestigt sind, derart, dass die Messspulenachsen mit der Waffenrohrachse zusammenfallen, dadurch gekennzeichnet, dass ein Rohr (15) an einem Ende mittels Karabinerverschluss (14) an einem an der Mündung des Waffenrohres (10) vorgesehenen Anschlussstück (11) und am anderen Ende ebenfalls mittels Karabinerverschluss (21) an einer Mündungsbremse (22) befestigt ist, und dass die Hülse (16) mit den Messspulen (17, 18) im Innern des Rohres (15) anschliessend an die Mündung des Waffenrohrs (10) angeordnet ist und den gleichen Innen durchmesser besitzt wie das Waffenrohr.

2. Vorrichtung nach Anspruch 1, dadurch gekennzeichnet, dass die beiden Messspulen (17, 18) in Schutzringen (19) aus Titan, die einen U-förmigen Querschnitt aufweisen, angeordnet sind.

3. Vorrichtung nach Anspruch 1, dadurch gekennzeichnet, dass in der Wand des Rohres (15) ein Temperaturfühler (30) angeordnet ist, um die Temperatur der Vorrichtung bei der Berechnung der Anfangsgeschwindigkeit zu berücksichtigen.

4. Vorrichtung nach Anspruch 2, dadurch gekennzeichnet, dass der Aussendurchmesser der Hülse (16) gleich gross ist wie der Innendurchmesser der Schutzringe (19) mit den Messspulen (17, 18).

### Claims

1. An apparatus for measuring the muzzle-velocity of a projectile, especially a sabot-projectile, fired out of a weapon, wherein the measuring apparatus is secured to the muzzle of the weapon barrel (10), comprising two measuring coils (17, 18) arranged in spaced relationship from one another, on a sleeve (16) having an axis which coincides with the weapon barrel axis, so that the axis of the measuring coils coincides also with the weapon barrel axis, characterised in that a tube (15) is fixed with one end by means of a bayonet joint (14) at a connection element (11) on the muzzle of the weapon barrel (10) and with the other end also by means of a bayonet joint (21) at a muzzle brake (22) and in that the sleeve (16) with the measuring coils (17, 18) is arranged in the inner of the tube (15) behind the muzzle of the weapon barrel (10) and possessing an internal diameter which is essentially the same as the internal diameter of the weapon barrel.

2. The apparatus as defined in claim 1, characterised in that the two measuring coils (17, 18) are arranged in protective rings (19) formed of titanium, having a substantially U-shaped cross-sectional configuration.

3. The apparatus as defined in claim 1, characterised in that a temperature feeler means is arranged in a wall of said tube (15), enabling to take into account the temperature of the measuring apparatus during computation of the muzzle velocity of the projectile.

4. The apparatus as defined in claim 2, characterised in that the external diameter of the sleeve (16) is essentially the same as the internal diameter of the protective rings (19) with the measuring coils (17, 18).

### Revendications

1. Dispositif pour mesurer la vitesse initiale d'un projectile lancé par une arme, notamment d'un projectile à miroir propulseur, ce dispositif étant fixé à l'orifice d'un tube (10) d'une arme et comporte deux bobines de mesure (17, 18) qui sont fixées à une certaine distance l'une de l'autre sur un manchon (16) coaxialement au tube de l'arme de façon que les axes des bobines de mesure correspondent à l'axe du tube de l'arme, caractérisé en ce qu'un tube (15) est fixé à une extrémité à l'aide d'une liaison à baïonnette (14) sur une pièce de raccordement (11) prévue à l'orifice du tube de l'arme et à l'autre extrémité, également à l'aide d'une liaison à baïonnette·(21), à un frein d'orifice (22) et en ce que le manchon (16) et les bobines de mesure (17, 18) sont logés à l'intérieur du tube (15) de façon adjacente à l'orifice du tube (10) de l'arme, et présentent le même diamètre intérieur que le tube de l'arme.

2. Dispositif selon la revendication 1, caractérisé en ce que les deux bobines de mesure (17, 18) sont logées dans des bagues de protection (19) en titane qui ont une section en forme de U.

3. Dispositif selon la revendication 1, caractérisé en ce qu'un capteur de température (30) est prévu dans la paroi du tube (15) pour tenir compte de la température du dispositif lors du calcul de la vitesse initiale.

4. Dispositif selon la revendication 2, caractérisé en ce que le diamètre extérieur du manchon (16) est égal au diamètre intérieur de la bague de protection (19) munie des bobines de mesure (17, 18).

FIG. 1

FIG. 2